# FASCICULE DE BREVET EUROPEEN

(11) **EP 2 986 838 B1**
(45) Date de publication et mention de la délivrance du brevet: **17.10.2018**
(21) Numéro de dépôt: 14725220.9
(22) Date de dépôt: 15.04.2014
(51) Int. Cl.: F02K 1/82, F02K 3/072, F02C 3/067

(54) **TUYÈRE TOURNANTE POUR TURBOPROPULSEUR D'AÉRONEF À SOUFFLANTE NON CARÉNÉE**
ROTIERENDE DÜSE FÜR EIN FLUGZEUG-TURBOPROP-TRIEBWERK MIT EINEM LÜFTER OHNE UMMANTELUNG
ROTATING NOZZLE FOR AN AIRCRAFT TURBOPROP ENGINE WITH AN UNDUCTED FAN

(30) Priorité: 15.04.2013 FR 1353391
(43) Date de publication de la demande: 24.02.2016
(73) Titulaire: Safran Nacelles, 76700 Gonfreville-l'Orcher (FR)
(72) Inventeur: MALOT, Hélène, 76310 Sainte Adresse (FR); GUEGOU, Jean-Pierre, 76290 Mannevillette (FR); BIENVENU, Philippe, 76700 Rogerville (FR); PRUNIN, Philippe, 76290 Montivilliers (FR)
(74) Mandataire: Gaillarde, Frédéric F. Ch.
(86) Numéro de dépôt international: PCT/FR2014/050919
(87) Numéro de publication internationale: WO 2014/170600

(56) Documents cités:
- FR-A1- 2 216 450
- FR-A1- 2 873 167
- GB-A- 878 195
- GB-A- 2 174 762
- US-A- 2 599 879
- US-A- 2 722 801
- "Radial Stretch Forming on Expanding Mandrel Machines", MACHINERY,, vol. 73, no. 7, 1 mars 1967 (1967-03-01), pages 88-98, XP001334799,

## Description

La présente invention concerne le domaine des turbopropulseurs d'aéronef à soufflante non carénée.

Plus précisément, la présente invention se rapporte à une tuyère tournante pour turbopropulseur à soufflante non carénée.

En se référant à la figure 1 extraite de la demande de brevet français appartenant à SNECMA, enregistrée sous le numéro 1152078, un turbopropulseur à soufflante non carénée comprend un turbopropulseur 1 et une nacelle 3 annulaire, disposée coaxialement par rapport au turbopropulseur, autour d'un axe longitudinal 5 du turbopropulseur.

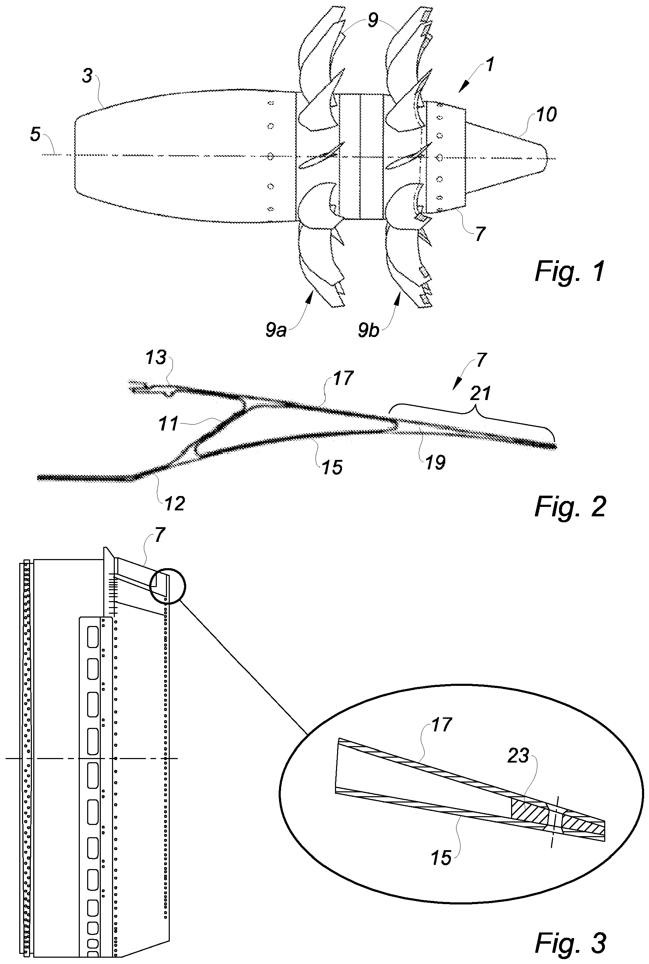

Le turbopropulseur 1 comprend, de l'amont (à gauche sur la figure 1) vers l'aval (à droite sur la figure 1) selon le sens d'écoulement de l'air, un compresseur, une chambre de combustion, une turbine à deux rotors contrarotatifs (ces éléments, logés dans la nacelle 3, ne sont pas visible sur cette figure) et une tuyère 7 d'éjection du flux d'air traversant le turbopropulseur. Ces rotors amont et aval entraînent chacun en rotation autour de l'axe longitudinal 5 un ensemble amont 9a et aval 9b de pales de soufflante 9 situées en aval du turbopropulseur 1.

La tuyère 7 d'éjection du flux d'air est dite tournante, en ce qu'elle est mobile en rotation autour de l'axe longitudinal 5 du turbopropulseur 1, par rapport à un cône d'éjection 10 des gaz sensiblement concentrique à la tuyère 7. A cet effet, et comme visible plus particulièrement sur la figure 2 illustrant schématiquement la tuyère 7 en coupe longitudinale, la section amont 11 de la tuyère 7 est reliée à un ensemble de brides 12, 13 respectivement solidaires du rotor aval de la turbine du turbopropulseur (non représenté) et de capots tournants assemblés autour des pales de soufflante 9b (visibles sur la figure 1).

Comme représenté sur la figure 2, la tuyère 7 présente une section longitudinale sensiblement triangulaire. La tuyère 7 comprend une paroi interne 15 et une paroi externe 17, chacune typiquement réalisée en Inconel.

Les parois interne 15 et externe 17 sont reliées entre elles grâce à une soudure circulaire 19 s'étendant sur toute la circonférence de la tuyère et définissant une zone de jonction annulaire 21 entre les parois interne et externe en aval de la tuyère.

Selon un autre type de tuyère, telle que celle illustrée sur la figure 3 représentant une tuyère non tournante d'éjection du flux d'air primaire d'un turboréacteur double flux, la zone de jonction entre les parois interne 15 et externe 17 de la tuyère 7 comprend une cale annulaire 23 disposée au niveau de la section aval de la tuyère, entre lesdites parois interne et externe. La cale annulaire 23 est maintenue en sandwich entre les parois interne et externe. La cale annulaire 23 est brasée sur la paroi interne 15 et assemblée par rivetage sur la paroi externe 17.

Une tuyère tournante selon l'art antérieur est divulguée dans le document GB2174762. Des tuyères non tournantes selon l'art antérieur sont divulguées dans les documents FR2216450 et US2722801.

Les tuyères tournantes ou non tournantes ont pour but de permettre l'éjection du flux d'air chaud émanant du turbopropulseur.

Toutefois, quel que soit le type de tuyère retenue, ces tuyères présentent toutes une zone de jonction annulaire au niveau de leur section aval. Le flux d'air chaud s'écoulant le long de la paroi interne de la tuyère diffuse de la chaleur entre les parois interne et externe de la tuyère, ce qui a pour conséquence de limiter les capacités de refroidissement du moteur.

Le document US 2 599 879 prévoit une zone de jonction annulaire entre les parois interne et externe de la tuyère, constituée par une cloison annulaire présentant des ouvertures à travers lesquelles passent des conduits dans lesquels circule de l'air froid.

Cette solution présente l'avantage de rafraîchir le moteur. Toutefois, la mise en place de ces tuyau est particulièrement complexe et augmente considérablement la masse de la tuyère, et donc de la tuyère.

La présente invention vise à pallier ces inconvénients, et se rapporte à cet effet à une tuyère tournante pour turbopropulseur d'aéronef à soufflante non carénée, comprenant :
- une paroi interne,
- une paroi externe radialement éloignée par rapport à ladite paroi interne et concentrique avec ladite paroi interne, les extrémités desdites parois interne et externe définissant un bord de fuite ouvert,
- une zone de jonction desdites parois interne et externe comprenant au moins une ouverture contenue dans un plan sensiblement transverse à un axe longitudinal de ladite tuyère, la zone de jonction des parois interne et externe comprenant en outre des moyens choisis dans le groupe suivant comprenant :
   - des moyens de liaison des parois de la tuyère, lesdits moyens comprenant, d'une part, au moins deux platines de liaison et, d'autre part, des moyens de fixation desdites platines entre elles, ou
   - au moins un patin solidaire de la paroi interne et au moins un patin solidaire de la paroi externe de la tuyère et positionné en vis-à-vis dudit au moins un patin de la paroi interne de la tuyère.

En prévoyant une ou plusieurs ouvertures dans la zone de jonction des parois interne et externe de la tuyère, on crée une ventilation entre lesdites parois interne et externe, ce qui permet d'assurer une bonne ventilation du moteur.

En prévoyant une zone de jonction des parois interne et externe comprenant soit des moyens de liaison des parois de la tuyère, lesdits moyens comprenant, d'une part, au moins deux platines de liaison et, d'autre part, des moyens de fixation desdites platines entre elles, soit ou au moins un patin solidaire de la paroi interne et au moins un patin solidaire de la paroi externe de la tuyère et positionné en vis-à-vis dudit patin de la paroi interne de la tuyère, la tuyère ne comprend ni une zone de jonction annulaire circonférentielle, ni de tuyaux de circulation d'air froid.

En conséquence, on réduit considérablement la masse de la tuyère tout en assurant une bonne ventilation du moteur.

En réduisant de la sorte la masse de la tuyère, on réduit également la consommation de carburant de l'ensemble propulsif.

Selon un premier mode de réalisation de l'invention, chacune des parois de la tuyère comprend au moins une peau métallique en Inconel.

Les moyens de liaison sont répartis discrètement sur la circonférence de la tuyère, entre les parois interne et externe de la tuyère.

Selon un deuxième mode de réalisation de l'invention, la paroi interne de la tuyère est constituée par une peau métallique en Inconel et la paroi externe de la tuyère est constituée par une peau en titane.

Cela permet avantageusement de réduire d'autant plus la masse de la tuyère par rapport au premier mode de réalisation de l'invention.

Selon une caractéristique optionnelle, les patins de la paroi interne sont surmontés d'une butée, par exemple en carbone, ce qui permet d'éviter un contact direct entre les patins des parois interne et externe, permettant avantageusement d'éviter une usure prématurée desdits patins.

Selon une variante commune aux deux modes de réalisation de l'invention, la paroi interne comprend au moins un raidisseur annulaire positionné en vis-à-vis d'au moins un raidisseur annulaire de la paroi externe, de façon à améliorer la tenue structurelle de la tuyère.

De préférence, la zone de jonction des parois interne et externe est située au niveau d'une section aval de la tuyère.

Selon l'invention, la peau métallique en Inconel des parois interne et externe est obtenue par un procédé de forgeage matriçage, qui permet très avantageusement de s'affranchir des soudures longitudinales pour former chacune des parois, mais également des soudures circulaires utilisées dans l'art antérieur pour assembler les parties constituant les parois. En réalisant la tuyère grâce à un tel procédé, on réduit en outre la masse de la tuyère.

D'autres caractéristiques et avantages de la présente invention apparaîtront à la lecture de la description qui va suivre et à l'examen des figures ci-annexées, dans lesquelles :
- la figure 1 représente un turbopropulseur à soufflante non carénée connue de l'art antérieur ;
- la figure 2 est une vue schématique en coupe longitudinale de la tuyère tournante selon l'art antérieur ;
- la figure 3 est une vue schématique en coupe longitudinale d'une portion de tuyère non tournante selon l'art antérieur ;
- la figure 4 illustre une portion de la tuyère selon l'invention, obtenue selon un premier mode de réalisation ;
- la figure 5 est une vue de détail de la zone de jonction des parois interne et externe de la tuyère ;
- la figure 6 illustre en coupe transversale selon la ligne 6-6 la tuyère de la figure 4 ;
- la figure 7 représente une portion de la tuyère selon l'invention, obtenue selon un deuxième mode de réalisation ;
- la figure 8 illustre en coupe transversale selon la ligne 8-8 la tuyère de la figure 7 ;
- la figure 9 est une vue en coupe selon la ligne 9-9 de la figure 8 ;
- la figure 10 illustre la tuyère du deuxième mode de réalisation de l'invention, vue depuis l'axe longitudinal de la tuyère.

Sur l'ensemble des figures, des références identiques ou analogues désignent des organes ou ensembles d'organes identiques ou analogues.

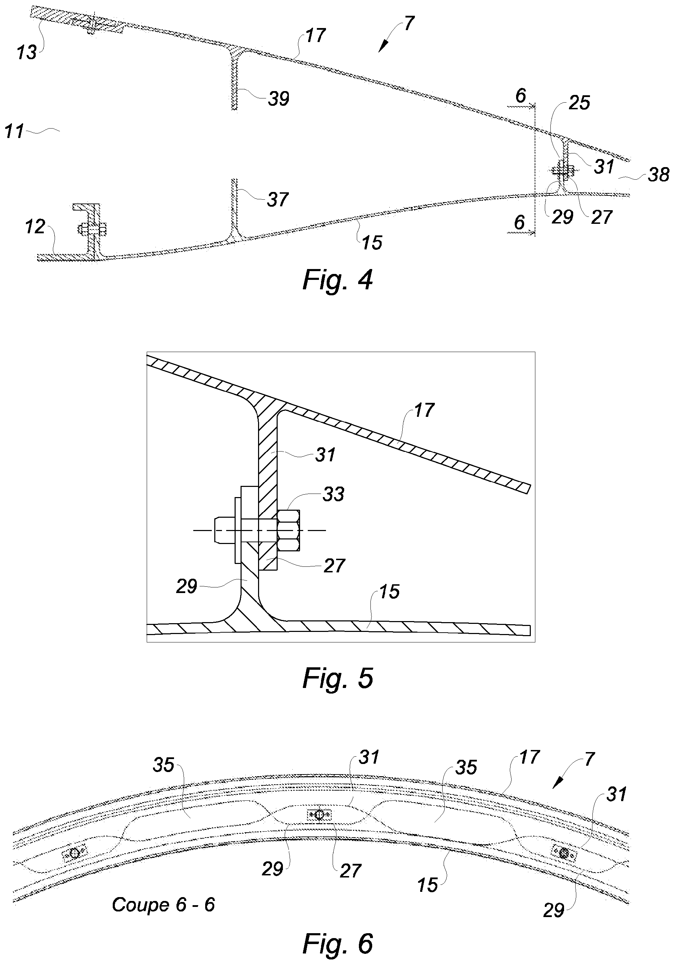

On se réfère à la figure 4, illustrant la tuyère réalisée selon un premier mode de réalisation de l'invention.

La tuyère 7 comprend une paroi interne 15 et une paroi externe 17, typiquement réalisées dans un matériau offrant une bonne résistance mécanique à des températures d'environ 600° Celsius au niveau de la paroi interne, et d'environ 300° Celsius au niveau de la paroi externe.

A cet effet, les parois interne et externe sont de préférence constituées par des peaux métalliques en Inconel, matériau présentant une résistance mécanique acceptable jusqu'à 800° Celsius.

La section amont 11 de la tuyère est reliée à un ensemble de brides 12, 13 respectivement solidaires du rotor aval de la turbine du turbopropulseur (non représenté) et de capots tournants assemblés autour des pales de soufflante aval. A titre d'exemple, la paroi interne 15 est boulonnée sur la bride 12 et la paroi externe 17 est vissée sur la bride 13.

Selon l'invention, la section aval 25 de la tuyère 7 comprend une zone de jonction 27 des parois interne et externe.

Cette zone de jonction des parois interne 15 et externe 17 comprend des moyens de liaison des parois de la tuyère, constitués par une pluralité de platines de liaison 29, 31.

Les platines de liaison 29 sont solidaires de la paroi interne 15 et orientées en direction de l'intérieur de la tuyère 7, et les platines de liaison 31 sont solidaires de la paroi externe 17 et orientées en direction de l'intérieur de la tuyère 7.

Les moyens de liaison des parois de la tuyère comprennent en outre des moyens de fixation des platines 29, 31 entre elles. A titre d'exemple non limitatif, ces moyens de fixation comprennent des vis 33, comme représenté plus en détails sur la figure 5.

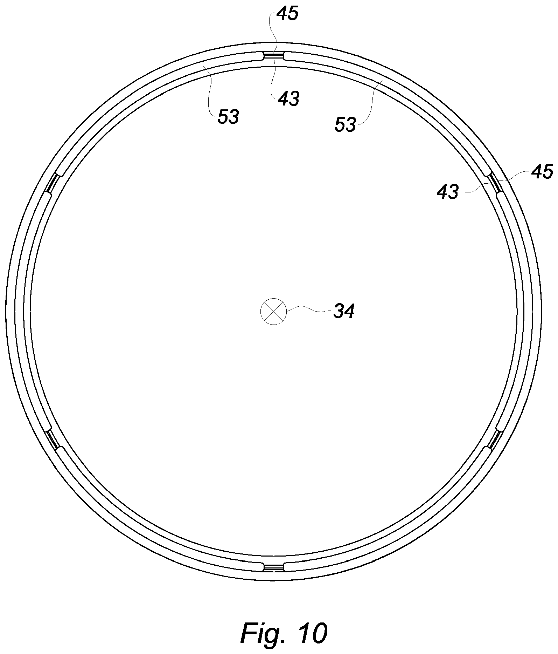

En se référant à la figure 6, illustrant une vue en coupe selon la ligne 6-6 définie sur la figure 4, la tuyère 7 selon l'invention comprend une pluralité d'ouvertures 35 contenues dans un plan sensiblement transverse à un axe longitudinal 34 (visible sur la figure 10 de la tuyère. Ces ouvertures 35 sont interposées avec les platines 29, 31 réparties discrètement sur la circonférence de la tuyère.

En se référant une dernière fois à la figure 4, le bord de fuite 38 de la tuyère est ouvert, c'est-à-dire que les extrémités des parois interne 15 et externe 17 ne sont pas reliées entre elles, ce qui permet d'assurer une bonne ventilation entre les parois.

Afin de renforcer la tenue structurelle de la tuyère, les parois interne 15 et externe 17 comprennent chacune un raidisseur annulaire 37, 39 disposés en vis-à-vis l'un de l'autre.

La tuyère selon l'invention est avantageusement réalisée par un procédé de forgeage-matriçage des peaux interne et externe en Inconel. Ce procédé permet très avantageusement de s'affranchir des soudures longitudinales et circulaires sur la tuyère.

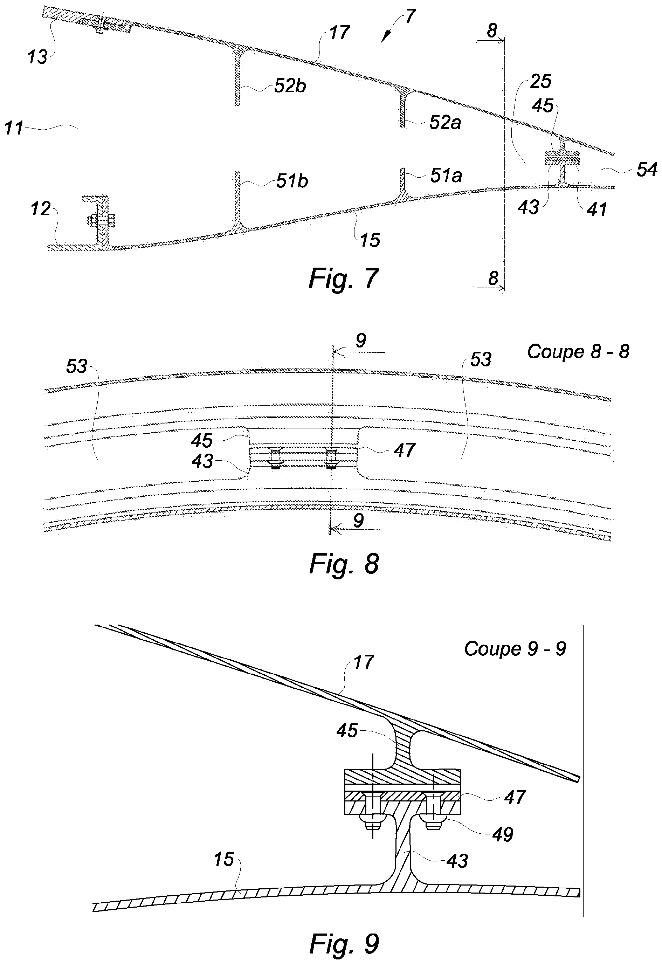

Selon un deuxième mode de réalisation de la tuyère selon l'invention, représenté aux figures 7 à 10, les parois interne 15 et externe 17 sont respectivement constituées par une peau métallique en Inconel et par une peau en titane. La présence d'une paroi externe constituée par une peau en titane permet de réduire la masse de la tuyère par rapport au premier mode de réalisation selon lequel les deux parois de la tuyère sont constituées par des peaux en Inconel.

Comme précédemment, la section amont 11 de la tuyère est reliée à un ensemble de brides 12, 13 respectivement solidaires du rotor aval de la turbine du turbopropulseur (non représenté) et de capots tournants assemblés autour des pales de soufflante aval.

Selon l'invention, la section aval 25 de la tuyère 7 comprend une zone de jonction 41 des parois interne et externe.

Cette zone de jonction des parois interne 15 et externe 17 comprend une pluralité de patins 43 solidaire de la paroi interne 15 et une pluralité de patins 45 solidaires de la paroi externe 17.

En coupe longitudinale, chaque patin 43, 45 présente une forme sensiblement de T. Chaque patin 43 est positionné en vis-à-vis de chaque patin 45.

Lorsque le turbopropulseur est à l'arrêt, les patins 45 de la paroi externe 17 sont en vis-à-vis des patins 43 de la paroi interne 15, mais ne sont pas en contact l'un avec l'autre, comme visible sur la figure 9.

Lorsque le turbopropulseur est en fonctionnement, la paroi externe de la tuyère, constituée par une peau en titane, se dilate plus fortement que la paroi interne de la tuyère, constituée par une peau métallique en Inconel, du fait de la différence entre les coefficients de dilatation thermique du titane et de l'Inconel. La paroi externe se déplace vers la paroi interne, ce qui entraîne un déplacement des patins de la paroi externe en direction des patins de la paroi interne positionnés en vis-à-vis, créant en conséquence une pluralité de liaisons discrètes (non représentées) du type « appui plan » entre les patins de la paroi externe et ceux de la paroi interne.

De manière préférée, il est recommandé de disposer une butée 47, par exemple en carbone, entre les patins 43 et 45, de façon à permettre l'absorption des chocs entre les patins, et en conséquence de limiter l'usure des patins. La butée 47 est par exemple fixée sur le patin 43 de la paroi interne 15 au moyen d'un ensemble de vis 49.

En prévoyant un ensemble de patins positionnés de façon à créer une pluralité de liaison appui-plan entre la paroi interne et la paroi externe de la tuyère, à la place de platines boulonnées entre elles tel que c'était le cas dans le premier mode de réalisation, on s'affranchit des problèmes de fluage qui pourraient survenir en raison de la différence entre les coefficients de dilatation différentielle entre l'Inconel et le titane.

En outre, contrairement au mode de réalisation précédent, aucun moyen de fixation entre les parois interne et externe n'est prévu.

Afin de renforcer la tenue structurelle de la tuyère, les parois interne 15 et externe 17 comprennent chacune deux raidisseurs annulaires 51a, 51b, 52a, 52b disposés en vis-à-vis l'un de l'autre.

Selon l'invention, et en se référant plus particulièrement aux figures 8 et 10, les patins 43, 45 sont répartis de façon discrète sur la circonférence de la tuyère, ce qui permet de prévoir une pluralité d'ouvertures 53 dans un plan transverse à l'axe longitudinal 34 de la tuyère.

A titre d'exemple non limitatif, six ouvertures 53 et six ensembles de patins 43, 45 sont prévus sur la circonférence de la tuyère.

Le bord de fuite 54 de la tuyère 7 (visible sur la figure 7) est, comme précédemment, ouvert, ce qui permet d'assurer une bonne ventilation entre les parois.

Comme précédemment, la paroi interne en Inconel est de manière préférée réalisée par un procédé de forgeage matriçage.

Grâce à la présente invention, la présence d'une zone de jonction annulaire circonférentielle n'est alors plus nécessaire.

En s'affranchissant d'une telle zone de jonction annulaire circonférentielle, on supprime de la sorte la nécessité de disposer de tuyaux de circulation de flux d'air froid prévus dans l'art antérieur afin de rafraîchir le moteur.

Ainsi, on réduit considérablement la masse de la tuyère tout en assurant une bonne ventilation du moteur, ce qui permet de réduire sensiblement la consommation de carburant, notamment sur les turbopropulseurs du type « Open Rotor ».

Enfin, comme il va de soi, l'invention ne se limite pas aux seules formes de réalisation de cette tuyère, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention.

## Revendications

1. Tuyère (7) tournante pour turbopropulseur d'aéronef à soufflante non carénée, comprenant :
- une paroi interne (15),
- une paroi externe (17) radialement éloignée par rapport à ladite paroi interne et concentrique avec ladite paroi interne,
- une zone de jonction (27, 41) desdites parois interne et externe, ladite tuyère étant **caractérisée en ce que** les extrémités desdites parois interne (15) et externe (17) définissent un bord de fuite (38, 54) ouvert,
la zone de jonction (27, 41) desdites parois interne et externe comprend au moins une ouverture (35, 53) contenue dans un plan sensiblement transverse à un axe longitudinal (34) de ladite tuyère, et comprend en outre des moyens choisis dans le groupe suivant comprenant :
- des moyens de liaison des parois de la tuyère, lesdits moyens comprenant, d'une part, au moins deux platines de liaison (29, 31) et, d'autre part, des moyens de fixation (33) desdites platines entre elles, ou
- au moins un patin (43) solidaire de la paroi interne (15) et au moins un patin (45) solidaire de la paroi externe (17) de la tuyère et positionné en vis-à-vis dudit au moins un patin (43) de la paroi interne (15) de la tuyère.

2. Tuyère (7) selon la revendication 1, **caractérisée en ce que** chacune des parois (15, 17) de la tuyère comprend au moins une peau métallique en Inconel.

3. Tuyère (7) selon l'une des revendications 1 ou 2, **caractérisée en ce que** les moyens de liaison sont répartis discrètement sur la circonférence de la tuyère, entre les parois interne (15) et externe (17) de la tuyère.

4. Tuyère (7) selon la revendication 1, **caractérisée en ce que** la paroi interne (15) de la tuyère est constituée par une peau métallique en Inconel et la paroi externe (17) de la tuyère est constituée par une peau en titane.

5. Tuyère (7) selon l'une des revendications 1 ou 4, **caractérisée en ce que** les patins (43) de la paroi interne (15) sont surmontés d'une butée (47), par exemple en carbone.

6. Tuyère (7) selon l'une quelconque des revendications 1 à 5, **caractérisée en ce que** la paroi interne (15) comprend au moins un raidisseur annulaire (37, 51a, 51b) positionné en vis-à-vis d'au moins un raidisseur annulaire (39, 52a, 52b) de la paroi externe (17).

7. Tuyère (7) selon l'une quelconque des revendications 1 à 6, **caractérisée en ce que** la zone de jonction (27, 41) des parois interne (15) et externe (17) est de préférence située au niveau d'une section aval (25) de la tuyère.

## Patentansprüche

1. Drehende Düse (7) für ein Flugzeug-Turboprop-Triebwerk mit Lüfter ohne Ummantelung, umfassend:
- eine Innenwand (15),
- eine in Bezug auf die Innenwand radial entfernte und mit der Innenwand konzentrische Außenwand (17),
- einen Verbindungsbereich (27, 41) der Innen- und Außenwand,
wobei die Düse **dadurch gekennzeichnet ist, dass** die Enden der Innen-(15) und Außenwand (17) eine offene Austrittskante (38, 54) festlegen,
wobei der Verbindungsbereich (27, 41) der Innen- und Außenwand mindestens eine Öffnung (35, 53) umfasst, die in einer Ebene enthalten ist, die zu einer Längsachse (34) der Düse im Wesentlichen quer verläuft, und ferner Mittel umfasst, die aus der folgenden Gruppe ausgewählt sind, umfassend:
- Verbindungsmittel der Wände der Düse, wobei die Mittel zum einen mindestens zwei Verbindungsplatten (29, 31) und zum anderen Befestigungsmittel (33) der Platten aneinander umfassen, oder
- mindestens eine Kufe (43), die mit der Innenwand (15) fest verbunden ist, und mindestens eine Kufe (45), die mit der Außenwand (17) der Düse fest verbunden ist und gegenüber der mindestens einen Kufe (43) der Innenwand (15) der Düse positioniert ist.

2. Düse (7) nach Anspruch 1, **dadurch gekennzeichnet, dass** jede der Wände (15, 17) der Düse mindestens eine metallische Haut aus Inconel umfasst.

3. Düse (7) nach einem der Ansprüche 1 oder 2, **dadurch gekennzeichnet, dass** die Verbindungsmittel auf dem Umfang der Düse zwischen der Innen- (15) und Außenwand (17) der Düse diskret verteilt sind.

4. Düse (7) nach Anspruch 1, **dadurch gekennzeichnet, dass** die Innenwand (15) der Düse von einer metallischen Haut aus Inconel gebildet ist und die Außenwand (17) der Düse von einer Haut aus Titan gebildet ist.

5. Düse (7) nach einem der Ansprüche 1 oder 4, **dadurch gekennzeichnet, dass** über den Kufen (43) der Innenwand (15) ein Anschlag (47) steht, beispielsweise aus Karbon.

6. Düse (7) nach einem der Ansprüche 1 bis 5, **dadurch gekennzeichnet, dass** die Innenwand (15) mindestens eine ringförmige Versteifung (37, 51a, 51b) umfasst, die gegenüber mindestens einer ringförmigen Versteifung (39, 52a, 52b) der Außenwand (17) positioniert ist.

7. Düse (7) nach einem der Ansprüche 1 bis 6, **dadurch gekennzeichnet, dass** sich der Verbindungsbereich (27, 41) der Innen- (15) und Außenwand (17) vorzugsweise im Bereich eines nachgelagerten Querschnitts (25) der Düse befindet.

## Claims

1. A rotating nozzle (5) for an aircraft turboprop with an unducted fan, comprising:
- an inner wall (15),
- an outer wall (17) radially remote from said inner wall and concentric with said inner wall,
- a junction area (27, 41) of said inner and outer walls,
said nozzle being **characterized in that** the ends of said inner (15) and outer (17) walls define an open trailing edge (38, 54), the junction area (27, 41) of said inner and outer walls comprises at least one opening (35, 53) contained in a plane substantially transverse to a longitudinal axis (34) of said nozzle, and further comprises means selected from the following group comprising:
- means for connecting the walls of the nozzle, said means comprising, on the one hand, at least two connecting plates (29, 31) and, on the other hand, means (33) for fastening said plates to each other, or
- at least one pad (43) secured to the inner wall (15) and at least one pad (45) secured to the outer wall (17) of the nozzle and positioned opposite said at least one pad (43) of the inner wall (15) of the nozzle.

2. The nozzle (7) according to claim 1, **characterized in that** each of the walls (15, 17) of the nozzle comprises at least one Inconel metal skin.

3. The nozzle (7) according to any of claims 1 or 2, **characterized in that** the connecting means are discretely distributed over the circumference of the nozzle, between the inner (15) and outer (17) walls of the nozzle.

4. The nozzle (7) according to claim 1, **characterized in that** the inner wall (15) of the nozzle is constituted by an Inconel metal skin and the outer wall (17) of the nozzle is constituted by a titanium skin.

5. The nozzle (7) according to any of claims 1 or 4, **characterized in that** the pads (43) of the inner wall (15) are topped with a stop (47), for example a carbon stop.

6. The nozzle (7) according to any one of claims 1 to 5, **characterized in that** the inner wall (15) comprises at least one annular stiffener (37, 51a, 51b) positioned opposite at least one annular stiffener (39, 52a, 52b) of the outer wall (17).

7. The nozzle (7) according to any one of claims 1 to 6, **characterized in that** the junction area (27, 41) of the inner (15) and outer (17) walls is preferably located at a downstream section (25) of the nozzle.
